# FASCICULE DE BREVET EUROPEEN

(11) **EP 4 051 534 B1**
(45) Date de publication et mention de la délivrance du brevet: **30.07.2025**
(21) Numéro de dépôt: 20792441.6
(22) Date de dépôt: 21.10.2020
(51) Int. Cl.: B60P 7/13, B62D 33/077, B62D 65/02

(54) **VÉHICULE AUTOMOBILE DOTÉ DE CAISSONS DE STOCKAGE**
KRAFTFAHRZEUG AUSGESTATTET MIT AUFBEWAHRUNGSBOXEN
AUTOMOTIVE VEHICLE EQUIPPED WITH STORAGE BOXES

(30) Priorité: 29.10.2019 FR 1912102
(43) Date de publication de la demande: 07.09.2022
(73) Titulaire: Renault s.a.s, 92100 Boulogne Billancourt (FR)
(72) Inventeur: BAUDLOT, François, 78180 Montigny le Bretonneux (FR)
(86) Numéro de dépôt international: PCT/EP2020/079666
(87) Numéro de publication internationale: WO 2021/083770

(56) Documents cités:
- EP-A2- 2 910 421
- WO-A1-2016/056318
- FR-A1- 3 076 824

## Description

La présente invention concerne un véhicule doté de caissons de stockage.

De tels véhicules qui peuvent s'apparenter à des véhicules utilitaires, présentent généralement une plateforme sur laquelle vient se fixer de façon réversible au moins un caisson dans lequel sont placées des marchandises à transporter. De cette manière, une fois que le véhicule est arrivé à destination, ledit au moins un caisson peut être désolidarisé de celui-ci afin, soit d'être ouvert sur place pour accéder directement aux marchandises, soit être chargé sur un autre véhicule pouvant par exemple être un vélo, une moto ou un scooter.

Un caisson est un conteneur ayant préférentiellement une forme simple comme par exemple cylindrique ou parallélépipédique et qui est doté d'au moins un moyen d'accès pouvant par exemple être un volet mobile ou un couvercle. Le document FR3076824A1 divulgue un véhicule conforme au préambule de la revendication 1. Le document EP2910421A2 divulgue un véhicule pourvu d'un dispositif de verrouillage pour verrouiller une ferrure d'angle d'un conteneur de fret.

Un véhicule selon l'invention possède un système de fixation d'au moins un caisson qui est réversible et sûr, et qui permet de solidariser/désolidariser facilement et rapidement ledit caisson au véhicule.

Afin de bien comprendre le positionnement des différentes pièces impliquées dans un véhicule selon l'invention, la description est réalisée en faisant référence à un repère orthonormé direct XYZ dans lequel X est un axe longitudinal avantarrière du véhicule orienté vers l'arrière, Y est un axe transversal orienté vers la droite du véhicule et Z est un axe vertical dirigé vers le haut.

Les notions de « coopération » et d' « interaction » sont équivalentes.

L'invention a pour objet un véhicule comprenant une plateforme et au moins un caisson fixé à ladite plateforme.

Selon l'invention, ladite plateforme comprend au moins une zone support destinée à maintenir un caisson sur le véhicule, ladite au moins une zone possédant des moyens de centrage du caisson et un moyen de fixation dudit caisson placé en position centrale dans ladite zone, le moyen de fixation comprenant deux organes de verrouillage montés mobiles sur la plateforme entre une position inactive pour laquelle ils sont alignés suivant un axe vertical Z et une position active de verrouillage pour laquelle ils se sont écartés l'un de l'autre, le caisson possédant un moyen de fixation complémentaire apte à coopérer avec le moyen de fixation et comportant une paroi de fixation solidarisée au caisson et dotée d'une ouverture, le caisson étant placé sur la plateforme de sorte que les deux organes de verrouillage ont été insérés dans l'ouverture de la paroi de fixation dans la position inactive et ont ensuite été déployés dans ladite paroi pour retenir le caisson contre la plateforme. Une particularité d'un véhicule selon l'invention, est que chaque zone support comprend des moyens de centrage qui vont permettre de positionner de façon satisfaisante, à chaque fois et à coup sûr, le caisson dans la zone support destinée à l'accueillir, et que chaque zone support comporte un moyen de fixation situé en position centrale dans ladite zone. Le moyen de fixation du caisson est unique dans chaque zone support. Il est à préciser que le moyen de fixation complémentaire coopère avec le moyen de fixation de la zone support pour assurer une fixation robuste du caisson sur la plateforme, c'est-à-dire une fixation sans jeu entre la plateforme et le caisson. Cette coopération étroite assure une bonne stabilité de fixation du caisson sur la plateforme suivant un axe vertical Z. Les moyens de centrage peuvent, soit faire parties intégrantes du moyen de fixation, soit constituer des pièces rapportées émergeant de la plateforme au niveau d'une zone support. Il est supposé que le moyen de fixation émerge de la plateforme au centre d'une zone support. Les organes de verrouillage sont assimilables à des doigts possédant une extrémité recourbée. Le déplacement des deux organes de verrouillage entre la position active et la position inactive, peut s'effectuer, soit de façon indépendante au moyen d'une motorisation associée à un organe de commande, soit de façon automatique en étant provoqué par le mouvement du caisson lorsqu'il atteint sa position définitive sur la plateforme. Dans ce dernier cas, un capteur pouvant par exemple être un capteur de pression, va détecter la présence du caisson et déclencher automatiquement l'interaction entre le moyen de fixation et le moyen de fixation complémentaire pour arrimer le caisson sur la plateforme. Dans la position inactive les deux moyens de verrouillage sont accolés l'un à l'autre et s'étendent suivant un axe vertical Z

Selon une caractéristique possible de l'invention, les deux organes de verrouillage sont placés dans un boitier dont une face est en contact avec la paroi comprenant l'ouverture, et dans la position active, les organes de verrouillage exercent une pression sur ladite paroi afin de la maintenir étroitement au contact de ladite face. De cette manière, c'est la pression exercée sur la paroi par les organes de verrouillage, qui va permettre à ladite paroi de se maintenir en contact étroit avec la face du boitier dans lequel sont logés les organes de verrouillage.

Selon une caractéristique possible de l'invention, le déplacement des organes de verrouillage entre la position active et la position inactive est réalisée au moyen d'une motorisation associé à un organe de commande. De cette manière, le verrouillage du caisson sur la plateforme peut s'effectuer à tout moment, après que le caisson ait été placé dans sa position définitive sur la plateforme dans la zone support correspondante.

Selon l'invention, les moyens de centrage d'une zone support comprennent quatre plots émergeant de la plateforme et répartis aux quatre coins d'un carré, le moyen de fixation étant unique et placé au centre dudit carré afin de maintenir le caisson entre lesdits quatre plots. Ces quatre plots sont inclus dans une même zone support, et sont destinés à enserrer étroitement le caisson afin notamment qu'il ne puisse pas se déplacer sur la plateforme dans un plan XY de ladite plateforme. Le caisson est amené au-dessus d'une zone support, et est ensuite descendu entre les quatre plots afin d'atteindre sa position définitive sur la plateforme. Les plots ont ainsi une double fonction :
- guider la descente du caisson vers la plateforme lors du montage dudit caisson sur ladite plateforme,
- empêcher le caisson de se déplacer le long de la plateforme suivant un plan XY.

Chaque plot a une forme simple, comme par exemple parallélépipédique et peut, soit constituer une pièce rapportée par rapport à la plateforme, soit faire partie intégrante de ladite plateforme pour former avec celle-ci une pièce monobloc réalisée dans le même matériau.

Selon une caractéristique possible de l'invention, les plots d'une même zone support présente chacun une face en pente de façon à faciliter le prépositionnement du caisson sur la plateforme entre les quatre plots de ladite zone support et son coulissement entre lesdits plots pour atteindre la plateforme. En effet, le chargement d'un caisson sur la plateforme s'effectue par le dessus de ladite plateforme, au moyen d'un abaissement du caisson sur celle-ci. Les plots vont ainsi contribuer à bien prépositionner le plot sur la zone support avant de faire subir au caisson un mouvement de translation vers le bas, qui va être guidé par lesdits plots de façon à amener le moyen de fixation complémentaire du caisson en vis-à-vis du moyen de fixation situé au centre d'une zone support de la plateforme.

Selon une caractéristique possible de l'invention, la coopération entre le moyen de fixation de la plateforme et le moyen de fixation complémentaire du caisson s'effectue dans la continuité du coulissement dudit caisson entre les quatre plots. De cette manière, la coopération entre le moyen de fixation de la plateforme et le moyen de fixation complémentaire du caisson est déclenchée par la présence du caisson et ne s'effectue qu'une fois que le caisson a été correctement positionné dans la zone support de la plateforme. Des capteurs, pouvant par exemple être des capteurs de pression et/ou de mouvement, détectent la présence du caisson lorsqu'il est correctement positionné dans la zone support, et envoie un signal à une centrale de commande qui active aussitôt les organes de verrouillage..

Selon une caractéristique possible de l'invention, la plateforme comprend quatre zones support destinées à maintenir quatre caissons, deux zones support étant placées de chaque côté d'un axe longitudinal X et central du véhicule.

Selon une caractéristique possible de l'invention, chaque zone support placée d'un côté de l'axe longitudinal X et central du véhicule est alignée suivant un axe transversal Y du véhicule sur une autre zone support placée de l'autre côté dudit axe longitudinal et central. De cette manière, l'ensemble formé par les quatre caissons est compact sur la plateforme, car les dits caissons sont répartis aux quatre coins d'un rectangle.

Selon une caractéristique possible de l'invention, la plateforme est amovible et peut être retirée du véhicule à tout moment, qu'elle supporte ou non au moins un caisson. De cette manière, plutôt que de retirer chaque caisson un par un de la plateforme, il peut être avantageux de retirer directement la plateforme à laquelle est solidarisé au moins un caisson. Lorsque la plateforme est dépourvue de caisson sur le véhicule, il peut être avantageux de la changer par une autre plateforme ayant des caractéristiques différentes pour permettre par exemple de charger des caissons de tailles et de formes différentes. Le retrait d'une plateforme chargée avec des caissons pleins et son remplacement par une plateforme chargée avec de nouveaux caissons vides peut permettre de gagner du temps lors d'une opération de chargement de caissons sur le véhicule.

L'invention a pour autre objet un procédé de chargement d'un caisson sur une plateforme de véhicule pour obtenir un véhicule conforme à l'invention.

Selon l'invention, le procédé comprend les étapes suivantes :
- une étape de placement du caisson au-dessus d'une zone support de la plateforme,
- une étape d'abaissement dudit caisson qui vient se placer entre les quatre plots de ladite zone support,
- une étape de poursuite de l'abaissement du caisson dans la zone support grâce au guidage assuré par une face en pente de chaque plot,
- une phase de fixation et de serrage du caisson sur la plateforme entre les quatre plots grâce à l'interaction entre le moyen de fixation et le moyen de fixation complémentaire.

De cette manière, les quatre plots vont permettre de bien prépositionner le caisson sur la zone support de la plateforme prévue pour recevoir ledit caisson, puis vont permettre grâce à leur face en pente de guider la descente du caisson entre lesdits quatre plots afin d'amener le moyen de fixation complémentaire en face du moyen de fixation. Dans la continuité de ce mouvement de descente, lesdits moyens vont coopérer afin d'arrimer solidement le caisson contre la plateforme.

Un véhicule selon l'invention présente l'avantage de posséder plusieurs caissons détachables indépendamment les uns des autres, conférant audit véhicule un caractère de grande modularité. De plus, un véhicule selon l'invention, de par le mécanisme de montage des caissons, a l'avantage de pouvoir présenter un rendu visuel amélioré du véhicule en permettant notamment de gommer les jeux entre les caissons et de parfaitement aligner leurs faces visibles donnant l'impression qu'un seul caisson de grande dimension a été monté sur la plateforme du véhicule. Enfin, le montage ou le démontage d'un caisson sur la plateforme du véhicule ne nécessite aucun outillage particulier ni aucune manipulation compliquée et peut donc être réalisé simplement et rapidement.

On donne ci-après une description détaillée d'un mode de réalisation préféré d'un véhicule selon l'invention en se référant aux figures suivantes :
[Fig. 1] représente une vue en perspective d'un véhicule selon l'invention,
[Fig. 2] représente une vue en perspective du dessus, d'une plateforme d'un véhicule selon l'invention,
[Fig. 3] représente une vue en perspective du dessous, d'une plateforme d'un véhicule selon l'invention,
[Fig. 4] représente une vue en perspective d'une plateforme et de trois palettes d'un véhicule selon l'invention, montées sur ladite plateforme,
[Fig. 5] représente une vue du dessus de la plateforme et des trois palettes de la figure 4,
[Fig. 6] représente une vue en perspective d'une plateforme et de deux palettes et demi d'un véhicule selon l'invention,
[Fig. 7] représente une vue en perspective simplifiée d'un système de fixation d'un caisson à la plateforme d'un véhicule
[Fig. 8] représente une vue en perspective simplifiée d'un système de fixation d'un caisson à la plateforme d'un véhicule
[Fig. 9] représente une vue en perspective d'un moyen de centrage d'un caisson sur une plateforme d'un véhicule selon l'invention.

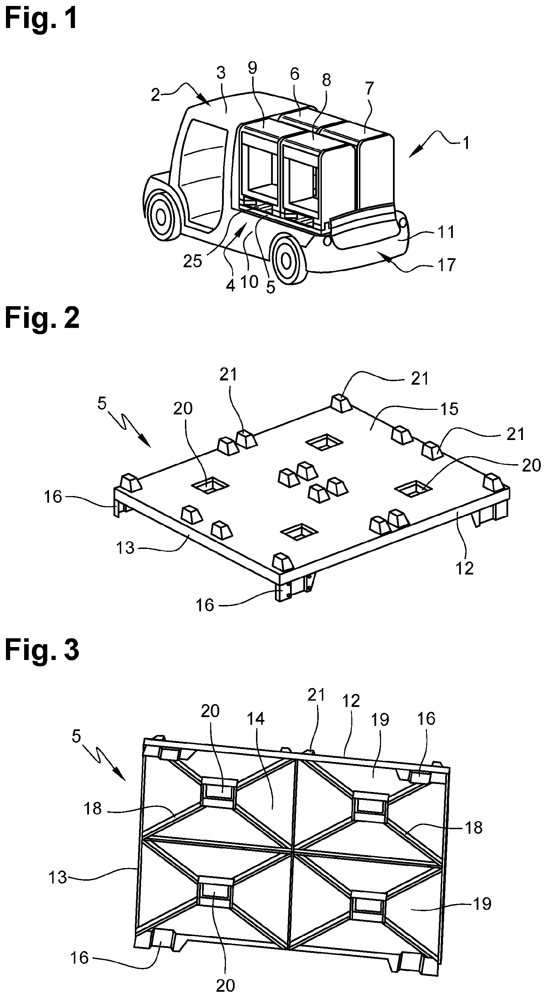

En se référant à la figure 1, un véhicule 1 selon l'invention comprend une partie avant 2 incluant une cabine de pilotage 3 et une partie arrière 4 comportant une plateforme 5 sur laquelle sont fixés quatre caissons identiques 6, 7, 8, 9. La cabine de pilotage 3 se compose préférentiellement d'un siège conducteur et d'un siège passager, ledit siège passager pouvant par exemple être un strapontin. Ce véhicule 1 est un véhicule utilitaire à l'usage d'un seul conducteur, le siège passager permettant à une deuxième personne de prendre place à côté du conducteur.

En se référant à la figure 1, la partie arrière 4 du véhicule comprend une structure 17 comportant deux segments longitudinaux 10 et parallèles s'étendant selon un axe longitudinal X du véhicule 1, chacun étant de faible épaisseur et inscrit dans un plan vertical. Cette structure 17 comprend également un segment transversal arrière 11, s'étendant selon un axe transversal Y du véhicule et reliant lesdits deux segments longitudinaux 10.

En se référant aux figures 2 et 3, la plateforme 5 est assimilable à une plaque rectangulaire délimité par deux grands côtés 12 et par deux petits côtés 13. Cette plaque 5 possède deux faces principales 14, 15 et parallèles, et est de faible épaisseur, avantageusement inférieure ou égale à 10cm. Cette plaque 5 possède quatre pieds 16 prenant naissance sur l'une 14 des deux faces principales de ladite plaque 3, et disposés aux quatre coins de celle-ci. Ces pieds 16 s'étendent parallèlement aux grands côtés 12 de la plaque 5 et permettent d'arrimer la plateforme 5 au véhicule au droit des deux segments longitudinaux 10 de la structure 17 du véhicule.

En se référant à la figure 3, la plaque 5 se divise en quatre zones support 19 rectangulaires, destinées chacune à recevoir un caisson 6, 7, 8, 9, chaque zone 19 possédant une ouverture centrale 20 traversante de forme rectangulaire. Chaque zone support 19 représente un tronçon de la plaque 5, et comporte quatre nervures 18 prenant naissance chacune à un coin de ladite zone 19 et joignant l'ouverture centrale 20, lesdites nervures 18 émergeant de la face 14 de ladite plaque 5 sur laquelle prennent naissance les pieds 16.

En se référant à la figure 2, la plaque 5 dispose sur l'autre 15 face principale, celle qui est opposée à celle 14 sur laquelle sont implantés les quatre pieds 16, de plusieurs plots 21, qui émergent de ladite face 15.

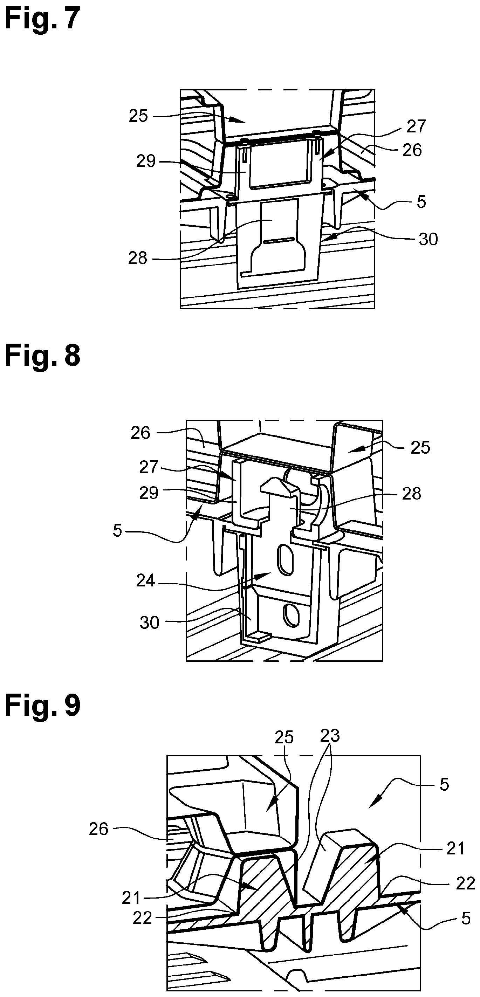

En se référant à la figure 9, chaque plot 21 est de forme parallélépipédique ou cubique, et est relié à la plateforme par l'intermédiaire d'une embase 22 faisant partie intégrante dudit plot 21. Chaque plot 21 présente au moins une face 23 en pente permettant d'élargir ladite embase 22 par rapport aux dimensions de la face du plot 21 qui est parallèle à cette embase 22 et qui lui est opposée.

En se référant aux figures 2, 4 et 5, chaque zone support 19 rectangulaire comprend quatre plots 21 répartis aux quatre coins dudit rectangle. Un moyen de fixation 24 du caisson 6, 7, 8, 9 est inséré dans l'ouverture centrale 20 de chaque zone support 19.

Chaque caisson 6, 7, 8, 9 a une forme préférentiellement parallélépipédique et possède au moins un moyen d'accès sous la forme d'un volet et/ou d'un couvercle apte à venir se visser sur ledit caisson 6, 7, 8, 9. Chaque caisson 6, 7, 8, 9 est creux et peut avantageusement être compartimenté pour stocker différents objets de façon structurée.

En se référant aux figures 1, 4, 5, 6 une palette 25 peut être préalablement fixée sous chaque caisson 6, 7, 8, 9 de manière à pouvoir manipuler aisément ledit caisson 6, 7, 8, 9. En effet, la palette 25 présente une ouverture élargie, pour permettre à la partie support d'un chariot élévateur de pénétrer dans ladite ouverture avant de déplacer l'ensemble constitué par ladite palette 25 et le caisson 6, 7, 8, 9. Cette palette 25, qui est destinée à être placée entre le caisson 6, 7, 8, 9 auquel elle est fixée, et la plateforme 5 du véhicule, présente des nervures 26 de renfort pour pouvoir encaisser les efforts générés par ledit caisson 6, 7, 8, 9 lorsque celui-ci est rempli d'objets.

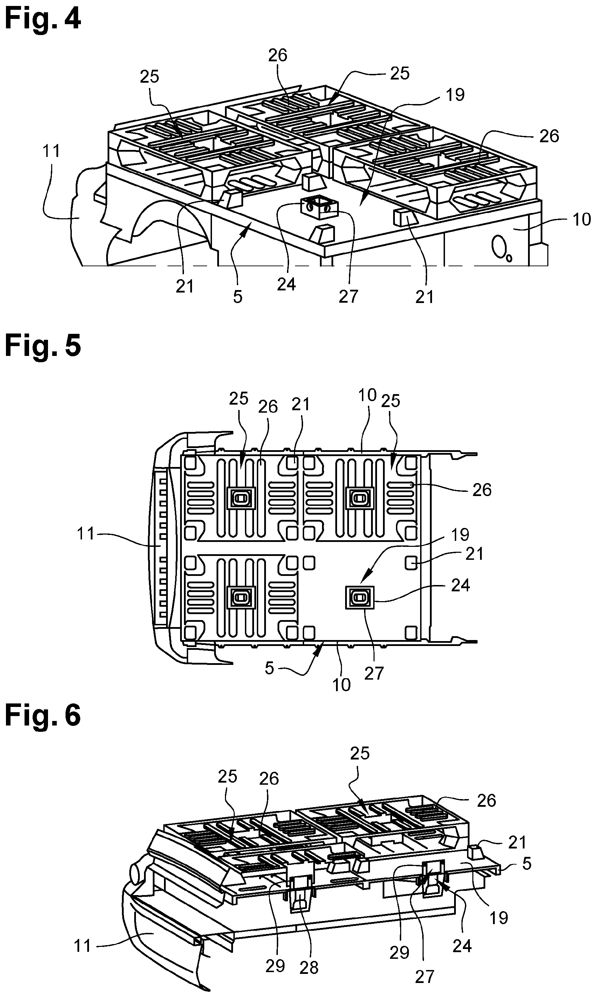

En se référant aux figures 4, 5, 6, chaque caisson 6, 7, 8, 9 possède un moyen de fixation complémentaire 27 destiné à interagir avec le moyen de fixation 24 de la zone support 19 pour assurer une fixation étroite et robuste du caisson 6, 7, 8, 9 dans la zone support 19 correspondante. Avantageusement, le moyen de fixation 24 et le moyen de fixation complémentaire 27 sont du type de ceux décrits dans la demande EP2910421. De façon schématique, le moyen de fixation 24 comprend deux organes de verrouillage 28 montés mobiles sur la plateforme 5 dans un boitier 30 ajouré, entre une position inactive pour laquelle ils sont parallèles et alignés suivant un axe vertical Z, et une position active de verrouillage pour laquelle ils se sont écartés l'un de l'autre. Le moyen de fixation complémentaire 27 comprend une paroi de fixation 29 dotée d'une ouverture et qui a été solidarisée à une zone inférieure de la palette 25 qui a été préalablement fixée sous le caisson 6, 7, 8, 9. Dans la position inactive, les deux organes de verrouillage sont accolés l'un à l'autre et présentent une section transversale réduite.

Le caisson 6, 7, 8, 9 est amené au-dessus de la zone support 19 de sorte que la paroi 29 soit située au-dessus des deux organes de verrouillage 28 qui ont été placés dans la position inactive dans le boitier 30. Puisque dans cette position inactive les deux organes de verrouillage 28 présentent une section transversale réduite, le caisson 6, 7, 8, 9 est descendu dans la zone support 19 de manière à faire entrer lesdits organes de verrouillage 28 dans l'ouverture de la paroi 29 jusqu'à ce que ladite paroi de fixation 29 vienne au contact dudit boitier 30. Une fois que les deux organes de verrouillage 28 ont pénétré dans la paroi de fixation 28, ils sont mis en mouvement pour passer dans la position active pour laquelle ils se sont écartés l'un de l'autre afin de maintenir un contact étroit entre une face du boitier 30 et la paroi de fixation 29. De cette manière, une fois que les deux organes de verrouillage 28 se sont déployés ils plaquent le caisson 6, 7, 8, 9, via la palette 25, contre la plateforme 5 au niveau de la zone support 19 concernée. Le caisson 6, 7, 8, 9 se retrouve ainsi bloqué suivant un axe vertical Z. L'activation des deux organes de verrouillage 28 peut s'effectuer de façon indépendante, à tout moment après que le caisson 6, 7, 8, 9 ait été correctement positionné dans la zone support 19, au moyen d'une motorisation associée à un organe de commande pouvant par exemple être un bouton-poussoir. Selon une autre variante de réalisation de l'invention, cette activation peut être provoquée directement par le caisson 6, 7, 8, 9 au moyen par exemple d'un capteur de pression ou de déplacement. De cette manière, le capteur détecte le moment où le caisson 6, 7, 8, 9 a été correctement positionné dans la zone support 19 et envoie un signal à une centrale de commande qui active aussitôt les deux organes de verrouillage 28.

Un procédé de chargement d'un caisson sur une plateforme 5 de véhicule pour obtenir un véhicule 1 conforme à l'invention, comprend les étapes suivantes :
- une étape de placement du caisson 6, 7, 8, 9 au-dessus d'une zone support 19 de la plateforme 5,
- une étape d'abaissement du caisson 6, 7, 8, 9 qui vient se placer entre les quatre plots 21 de la zone support 19, lesdits plots 21 permettant de prépositionner correctement ledit caisson 6, 7, 8, 9 au-dessus de la zone support 19.
- une étape de poursuite de l'abaissement du caisson 6, 7, 8, 9 vers la zone support 19 grâce au guidage assuré par la face 23 en pente de chaque plot 21,
- une phase de fixation et de serrage du caisson 6, 7, 8, 9 sur la plateforme 5 entre les quatre plots 21 grâce à l'interaction entre le moyen de fixation 24 et le moyen de fixation complémentaire 27 du caisson 6, 7, 8, 9.

Un tel procédé permet d'arrimer solidement le caisson à la plateforme 5 suivant un axe vertical Z grâce à la nature de l'interaction entre le moyen de fixation 24 et le moyen de fixation complémentaire 27 du caisson 6, 7, 8, 9. Les plots 21 permettent non seulement de guider le caisson 6, 7, 8, 9 dans la zone support 19 pour atteindre sa position définitive sur ladite plateforme 5, mais également de bloquer la position dudit caisson 6, 7, 8, 9 sur ladite plateforme 5 en l'empêchant de se déplacer dans un plan XY.

Selon une variante possible de l'invention, la plateforme 5 peut être retirée du véhicule 1 au moyen d'une manipulation simple et sans l'utilisation d'un outillage particulier. Ce retrait peut être réalisé alors qu'aucun caisson 6, 7, 8, 9 n'est fixé à ladite plateforme 5. Dans ce cas, une autre plateforme 5 ayant une autre répartition des plots 21 et une autre disposition des moyens de fixation 24 peut venir se fixer sur le véhicule pour arrimer des caissons 6, 7, 8, 9 de tailles différentes et selon une disposition différente. Le retrait de la plateforme 5 peut également être réalisé alors que des caissons 6, 7, 8, 9 sont fixés à ladite plateforme 5. Il peut en effet être avantageux en termes de gain de temps, de retirer la plateforme 5 sur laquelle sont arrimés des caissons pleins, et la remplacer par une nouvelle plateforme 5 chargée avec des caissons 6, 7, 8, 9 vides.

## Revendications

1. Véhicule (1) comprenant une plateforme (5) et au moins un caisson (6, 7, 8, 9) fixé à ladite plateforme (5), dans lequel ladite plateforme (6) comprend au moins une zone support (19) destinée à maintenir un caisson (6, 7, 8, 9) sur le véhicule (1), ladite au moins une zone (19) possédant des moyens de centrage (21) du caisson (6, 7, 8, 9) et un moyen de fixation (24) dudit caisson (6, 7, 8, 9) placé en position centrale dans ladite zone (19),
le véhicule (1) étant **caractérisé en ce que** le moyen de fixation (24) comprend deux organes de verrouillage (28) montés mobiles sur la plateforme (5) entre une position inactive pour laquelle ils sont alignés suivant un axe vertical Z et une position active de verrouillage pour laquelle ils se sont écartés l'un de l'autre, le caisson (6, 7, 8, 9) possédant un moyen de fixation complémentaire (27) apte à coopérer avec le moyen de fixation (24) et comportant une paroi de fixation (29) solidarisée au caisson (6, 7, 8, 9) et dotée d'une ouverture, le caisson (6, 7, 8, 9) étant placé sur la plateforme (5) de sorte que les deux organes de verrouillage (28) ont été insérés dans l'ouverture de la paroi de fixation (29) dans la position inactive et ont ensuite été déployés dans ladite paroi (29) pour retenir le caisson (6, 7, 8, 9) contre la plateforme (5),
**en ce que** les moyens de centrage d'une zone support (19) comprennent quatre plots (21) émergeant de la plateforme (5) et répartis aux quatre coins d'un carré, et **en ce que** le moyen de fixation (24) est unique et est placé au centre dudit carré afin de maintenir le caisson (6, 7, 8, 9) entre lesdits quatre plots.

2. Véhicule selon la revendication 1, **caractérisé en ce que** les deux organes de verrouillage (28) sont placés dans un boitier (30) dont une face est en contact avec la paroi (29) comprenant l'ouverture, et **en ce que** dans la position active les organes de verrouillage (28) exercent une pression sur ladite paroi (29) afin de la maintenir étroitement au contact de ladite face.

3. Véhicule selon l'une quelconque des revendications 1 ou 2, **caractérisé en ce que** le déplacement des organes de verrouillage (28) entre la position active et la position inactive est réalisée au moyen d'une motorisation associé à un organe de commande.

4. Véhicule selon l'une quelconque des revendications 1 à 3, **caractérisé en ce que** les plots (21) d'une même zone support (19) présente chacun une face en pente (23) de façon à faciliter le prépositionnement du caisson (6, 7, 8, 9) sur la plateforme (5) entre les quatre plots (21) de ladite zone support (19) et son coulissement entre lesdits plots (21) pour atteindre la plateforme (5).

5. Véhicule selon la revendication 1, **caractérisé en ce que** la coopération entre le moyen de fixation (24) de la plateforme (5) et le moyen de fixation complémentaire (27) du caisson (6, 7, 8, 9) s'effectue dans la continuité du coulissement dudit caisson (6, 7, 8, 9) entre les quatre plots (21).

6. Véhicule selon l'une quelconque des revendications 1 à 5, **caractérisé en ce que** la plateforme (5) comprend quatre zones support (19) destinées à maintenir quatre caissons (6, 7, 8, 9), et **en ce que** deux zones support (19) sont placées de chaque côté d'un axe longitudinal X et central du véhicule (1).

7. Véhicule selon la revendication 6, **caractérisé en ce que** chaque zone support (19) placée d'un côté de l'axe longitudinal X et central du véhicule (1) est alignée suivant un axe transversal Y du véhicule (1) sur une autre zone support (19) placée de l'autre côté dudit axe longitudinal et central.

8. Véhicule selon l'une quelconque des revendications 1 à 7, **caractérisé en ce que** la plateforme (5) est amovible et peut être retirée du véhicule (1) à tout moment, qu'elle supporte ou non au moins un caisson (6, 7, 8, 9)

9. Procédé de chargement d'un caisson (6, 7, 8, 9) sur une plateforme (5) de véhicule pour obtenir un véhicule (1) conforme à l'une quelconque des revendications 1 à 8, **caractérisé en ce qu'**il comprend les étapes suivantes :
- une étape de placement du caisson (6, 7, 8, 9) au-dessus d'une zone support (19) de la plateforme (5),
- une étape d'abaissement dudit caisson (6, 7, 8, 9) qui vient se placer entre les quatre plots (21) de ladite zone support (19),
- une étape de poursuite de l'abaissement du caisson (6, 7, 8, 9) dans la zone support (19) grâce au guidage assuré par une face en pente (23) de chaque plot (21),
- une phase de fixation et de serrage du caisson (6, 7, 8, 9) sur la plateforme (5) entre les quatre plots (21) grâce à l'interaction entre le moyen de fixation (24) et le moyen de fixation complémentaire (27).

## Patentansprüche

1. Fahrzeug (1), umfassend eine Plattform (5) und mindestens eine Box (6, 7, 8, 9), die an der Plattform (5) befestigt ist, wobei die Plattform (6) mindestens einen Stützbereich (19) umfasst, der dazu bestimmt ist, eine Box (6, 7, 8, 9) auf dem Fahrzeug (1) zu halten, wobei der mindestens eine Stützbereich (19) Zentriermittel (21) zum Zentrieren der Box (6, 7, 8, 9) und ein Befestigungsmittel (24) zum Befestigen der Box (6, 7, 8, 9), das in zentraler Position in dem Bereich (19) angeordnet ist, umfasst,
wobei das Fahrzeug (1) **dadurch gekennzeichnet ist, dass** das Befestigungsmittel (24) zwei Verriegelungselemente (28) umfasst, die auf der Plattform (5) beweglich zwischen einer inaktiven Position, bei der sie entlang einer vertikalen Achse Z ausgerichtet sind, und einer aktiven Verriegelungsposition, bei der sie sich voneinander beabstandet haben, montiert sind, wobei die Box (6, 7, 8, 9) ein komplementäres Befestigungsmittel (27) umfasst, das geeignet ist, mit dem Befestigungsmittel (24) zusammenzuwirken, und eine Befestigungswand (29) beinhaltet, die mit der Box (6, 7, 8, 9) fest verbunden ist und mit einer Öffnung versehen ist, wobei die Box (6, 7, 8, 9) auf der Plattform (5) so angeordnet ist, dass die beiden Verriegelungselemente (28) in die Öffnung der Befestigungswand (29) in der inaktiven Position eingeführt worden sind und anschließend in der Wand (29) ausgefahren worden sind, um die Box (6, 7, 8, 9) gegen die Plattform (5) zurückzuhalten,
dass die Zentriermittel eines Stützbereichs (19) vier Klötze (21) umfassen, die aus der Plattform (5) herausragen und an den vier Ecken eines Vierecks verteilt sind, und dass das Befestigungsmittel (24) einzig ist und in der Mitte des Vierecks angeordnet ist, um die Boxen (6, 7, 8, 9) zwischen den vier Klötzen zu halten.

2. Fahrzeug nach Anspruch 1, **dadurch gekennzeichnet, dass** die beiden Verriegelungselemente (28) in einem Gehäuse (30) angeordnet sind, von dem eine Fläche in Kontakt mit der die Öffnung umfassenden Wand (29) ist, und dass die Verriegelungselemente (28) in der aktiven Position einen Druck auf die Wand (29) ausüben, um sie eng im Kontakt mit der Fläche zu halten.

3. Fahrzeug nach einem der Ansprüche 1 oder 2, **dadurch gekennzeichnet, dass** das Verlagern der Verriegelungselemente (28) zwischen der aktiven Position und der inaktiven Position mittels eines Antriebs ausgeführt wird, der einem Bedienelement zugeordnet ist.

4. Fahrzeug nach einem der Ansprüche 1 bis 3, **dadurch gekennzeichnet, dass** die Klötze (21) eines selben Stützbereichs (19) jeweils eine schräge Fläche (23) aufweisen, so dass die Vorpositionierung der Box (6, 7, 8, 9) auf der Plattform (5) zwischen den vier Klötzen (21) des Stützbereichs (19) und ihr Gleiten zwischen den Klötzen (21) zum Erreichen der Plattform (5) erleichtert werden.

5. Fahrzeug nach Anspruch 1, **dadurch gekennzeichnet, dass** das Zusammenwirken zwischen dem Befestigungsmittel (24) der Plattform (5) und dem komplementären Befestigungsmittel (27) der Box (6, 7, 8, 9) in der Fortführung des Gleitens der Box (6, 7, 8, 9) zwischen den vier Klötzen (21) erfolgt.

6. Fahrzeug nach einem der Ansprüche 1 bis 5, **dadurch gekennzeichnet, dass** die Plattform (5) vier Stützbereiche (19) umfasst, die dazu bestimmt sind, vier Boxen (6, 7, 8, 9) zu halten, und dass zwei Stützbereiche (19) auf jeder Seite einer Längs- und Mittelachse X des Fahrzeugs (1) angeordnet sind.

7. Fahrzeug nach Anspruch 6, **dadurch gekennzeichnet, dass** jeder Stützbereich (19), der auf einer Seite der Längs- und Mittelachse X des Fahrzeugs (1) angeordnet ist, entlang einer Querachse Y des Fahrzeugs (1) auf einen anderen Stützbereich (19) ausgerichtet ist, der auf der anderen Seite der Längs- und Mittelachse angeordnet ist.

8. Fahrzeug nach einem der Ansprüche 1 bis 7, **dadurch gekennzeichnet, dass** die Plattform (5) abnehmbar ist und von dem Fahrzeug (1) jederzeit entfernt werden kann, unabhängig davon, ob sie mindestens eine Box (6, 7, 8, 9) trägt oder nicht.

9. Verfahren zum Laden einer Box (6, 7, 8, 9) auf eine Plattform (5) eines Fahrzeugs, um ein Fahrzeug (1) nach einem der Ansprüche 1 bis 8 zu erhalten, **dadurch gekennzeichnet, dass** es die folgenden Schritte umfasst:
- einen Schritt des Anordnens der Box (6, 7, 8, 9) über einem Stützbereich (19) der Plattform (5),
- einen Schritt des Absenkens der Box (6, 7, 8, 9), die zwischen den vier Klötzen (21) des Stützbereichs (19) angeordnet wird,
- einen Schritt des Fortsetzens des Absenkens der Box (6, 7, 8, 9) in dem Stützbereich (19) dank der Führung, die durch eine schräge Fläche (23) jedes Klotzes (21) gewährleistet wird,
- eine Phase des Befestigens und Festklemmens der Box (6, 7, 8, 9) auf der Plattform (5) zwischen den vier Klötzen (21) dank der Wechselwirkung zwischen dem Befestigungsmittel (24) und dem komplementären Befestigungsmittel (27).

## Claims

1. Vehicle (1) comprising a platform (5) and at least one box (6, 7, 8, 9) attached to said platform (5), wherein said platform (6) comprises at least one support zone (19) intended for holding a box (6, 7, 8, 9) on the vehicle (1), said at least one zone (19) having means (21) for centring the box (6, 7, 8, 9) and a means (24) for attaching said box (6, 7, 8, 9) centrally located in said zone (19),
the vehicle (1) being **characterized in that** the attachment means (24) comprises two locking members (28) mounted so as to be movable on the platform (5) between an inactive position for which they are aligned along a vertical axis Z and an active locking position for which they are positioned spaced apart from each other, the box (6, 7, 8, 9) having a complementary attachment means (27) capable of cooperating with the attachment means (24) and comprising an attachment wall (29) secured to the box (6, 7, 8, 9) and provided with an opening, the box (6, 7, 8, 9) being positioned on the platform (5) such that the two locking members (28) have been inserted into the opening of the attachment wall (29) in the inactive position and have then been deployed into said wall (29) to retain the box (6, 7, 8, 9) against the platform (5),
**in that** the centring means of a support zone (19) comprise four blocks (21) emerging from the platform (5) and distributed at the four corners of a square, and **in that** the attachment means (24) is unique and is placed at the centre of said square in order to hold the box (6, 7, 8, 9) between said four blocks.

2. Vehicle according to Claim 1, **characterized in that** the two locking members (28) are placed in a housing (30), one face of which is in contact with the wall (29) comprising the opening, and **in that** in the active position, the locking members (28) exert pressure on said wall (29) in order to keep it tightly in contact with said face.

3. Vehicle according to either one of Claims 1 and 2, **characterized in that** the movement of the locking members (28) between the active position and the inactive position is carried out by means of a drive associated with a control member.

4. Vehicle according to any one of Claims 1 to 3, **characterized in that** the blocks (21) of one and the same support zone (19) each have a sloping face (23) so as to facilitate the pre-positioning of the box (6, 7, 8, 9) on the platform (5) between the four blocks (21) of said support zone (19) and the sliding thereof between said blocks (21) to reach the platform (5).

5. Vehicle according to Claim 1, **characterized in that** the cooperation between the attachment means (24) of the platform (5) and the complementary attachment means (27) of the box (6, 7, 8, 9) takes place in the continuity of the sliding of said box (6, 7, 8, 9) between the four blocks (21).

6. Vehicle according to any one of Claims 1 to 5, **characterized in that** the platform (5) comprises four support zones (19) intended for holding four boxes (6, 7, 8, 9), and **in that** two support zones (19) are placed on either side of a longitudinal and central axis X of the vehicle (1).

7. Vehicle according to Claim 6, **characterized in that** each support zone (19) placed on one side of the longitudinal and central axis X of the vehicle (1) is aligned along a transverse axis Y of the vehicle (1) with another support zone (19) placed on the other side of said longitudinal and central axis.

8. Vehicle according to any one of Claims 1 to 7, **characterized in that** the platform (5) is removable and can be removed from the vehicle (1) at any time, whether or not it is supporting at least one box (6, 7, 8, 9).

9. Method for loading a box (6, 7, 8, 9) onto a vehicle platform (5) in order to obtain a vehicle (1) according to any one of Claims 1 to 8, **characterized in that** it comprises the following steps:
- a step of positioning the box (6, 7, 8, 9) above a support zone (19) of the platform (5),
- a step of lowering said box (6, 7, 8, 9) which becomes positioned between the four blocks (21) of said support zone (19),
- a step of continuing the lowering of the box (6, 7, 8, 9) in the support zone (19) thanks to the guidance provided by a sloping face (23) of each block (21),
- a phase of attaching the box (6, 7, 8, 9) and clamping it on the platform (5) between the four blocks (21) thanks to the interaction between the attachment means (24) and the complementary attachment means (27).
